(19) Europäisches Patentamt
European Patent Office
Office européen des brevets

(11) **EP 4 177 632 A1**

(12) **EUROPEAN PATENT APPLICATION**
published in accordance with Art. 153(4) EPC

(43) Date of publication:
**10.05.2023 Bulletin 2023/19**

(21) Application number: **21833318.5**

(22) Date of filing: **02.06.2021**

(51) International Patent Classification (IPC):
**G01S 7/497** *(2006.01)*     **G01S 17/894** *(2020.01)*

(52) Cooperative Patent Classification (CPC):
**G01S 7/497; G01S 17/894**

(86) International application number:
**PCT/JP2021/021096**

(87) International publication number:
**WO 2022/004259 (06.01.2022 Gazette 2022/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **01.07.2020   JP 2020114483**

(71) Applicant: **Kyocera Corporation**
**Kyoto-shi Kyoto 612-8501 (JP)**

(72) Inventors:
• **OKADA Hiroki**
**Kyoto-shi, Kyoto 612-8501 (JP)**
• **TAKAYAMA Yoshiteru**
**Kyoto-shi, Kyoto 612-8501 (JP)**

(74) Representative: **Viering, Jentschura & Partner mbB**
**Patent- und Rechtsanwälte**
**Am Brauhaus 8**
**01099 Dresden (DE)**

(54) **IMAGE PROCESSING DEVICE AND RANGING DEVICE**

(57)     Provided are an image processing apparatus and a distance-measurement apparatus capable of reducing the influences of environmental changes and changes that occur over time in electromagnetic wave detection. The image processing apparatus includes a reflection-intensity-information acquisition unit (142) configured to acquire reflection-intensity information of a radiation wave at a position of an object, the radiation wave being an electromagnetic wave radiated in multiple directions in a space in which the object is present, based on a reflected wave that is the radiation wave reflected by the object and generate a reflection-intensity image representing a reflection intensity of the radiation wave in the space based on the reflection-intensity information, an image-information acquisition unit (141) configured to acquire a luminance image of the space, and a correspondence-information calculation unit (146) configured to calculate, based on a position of the object in the reflection-intensity image and a position of the object in the luminance image, correspondence information that makes the reflection-intensity image and the luminance image correspond to each other.

FIG. 1

EP 4 177 632 A1

**Description**

CROSS-REFERENCE TO RELATED APPLICATIONS

The present application claims the priority of Japanese Patent Application No. 2020-114483 filed on July 1, 2020, the disclosure of which is hereby incorporated by reference in its entirety.

TECHNICAL FIELD

The present disclosure relates to an image processing apparatus and a distance-measurement apparatus.

BACKGROUND OF INVENTION

In recent years, an apparatus that acquires information relating to surroundings from detection results obtained by a plurality of detectors that detect electromagnetic waves has been developed. For example, there is known an electromagnetic-wave detection apparatus that reduces a difference between coordinate systems in detection results obtained by detectors (see Patent Literature 1).

CITATION LIST

PATENT LITERATURE

Patent Literature 1: Japanese Unexamined Patent Application Publication No. 2018-200927

SUMMARY

In a first aspect of the present disclosure, an image processing apparatus includes a reflection-intensity-information acquisition unit, an image-information acquisition unit, and a correspondence-information calculation unit. The reflection-intensity-information acquisition unit acquires reflection-intensity information of a radiation wave at a position of an object, the radiation wave being an electromagnetic wave radiated in multiple directions in a space in which the object is present, based on a reflected wave that is the radiation wave reflected by the object and generate a reflection-intensity image representing a reflection intensity of the radiation wave in the space based on the reflection-intensity information. The image-information acquisition unit acquires a luminance image of the space. The correspondence-information calculation unit calculates, based on a position of the object in the reflection-intensity image and a position of the object in the luminance image, correspondence information that makes the reflection-intensity image and the luminance image correspond to each other.

In a second aspect of the present disclosure, an image processing apparatus includes an image-information acquisition unit, a reflection-intensity-information acquisition unit, and a correspondence-information calculation unit. The image-information acquisition unit acquires a luminance image of a space in which an object is present. The reflection-intensity-information acquisition unit acquires a reflection-intensity image representing a reflection intensity of a radiation wave at a position in the space, the radiation wave being an electromagnetic wave radiated into the space, and the reflection-intensity image being generated based on a reflected wave that is the radiation wave reflected by the object. The correspondence-information calculation unit calculates correspondence information that makes a position included in the reflection-intensity image and a position included in the luminance image correspond to each other, each of the positions corresponding to a predetermined position in the space.

In a third aspect of the present disclosure, a distance-measurement apparatus includes a reflection-intensity-information acquisition unit, an image-information acquisition unit, a correspondence-information calculation unit, and a calculation unit. The reflection-intensity-information acquisition unit acquires reflection-intensity information of a radiation wave at a position of an object, the radiation wave being an electromagnetic wave radiated in multiple directions in a space in which the object is present, based on a reflected wave that is the radiation wave reflected by the object and generate a reflection-intensity image representing a reflection intensity of the radiation wave in the space based on the reflection-intensity information. The image-information acquisition unit acquires a luminance image of the space. The correspondence-information calculation unit calculates, based on a position of the object in the reflection-intensity image and a position of the object in the luminance image, correspondence information that makes the reflection-intensity image and the luminance image correspond to each other. The calculation unit calculates a distance to the object based on detection information of the reflected wave acquired with the reflection-intensity information.

BRIEF DESCRIPTION OF THE DRAWINGS

FIG. 1 is a diagram illustrating a schematic configuration of an electromagnetic-wave detection apparatus according to an embodiment.

FIG. 2 is a diagram illustrating a travelling direction of an electromagnetic wave in a first state and a second state in the electromagnetic-wave detection apparatus illustrated in FIG. 1.

FIG. 3 is a diagram for describing detection of electromagnetic waves including a reflected wave.

FIG. 4 is a timing chart for describing distance calculation.

FIG. 5 is a diagram illustrating an example of a luminance image of a space in which an object is present.

FIG. 6 is a diagram illustrating the space the same as that in the luminance image, which is illustrated in FIG. 5, as an image based on distance.

FIG. 7 is a diagram illustrating the space the same as that in the luminance image, which is illustrated in FIG. 5, as an image based on reflection intensity.

FIG. 8 is a diagram illustrating how to associate a reflection-intensity image with a luminance image.

FIG. 9 is a flowchart illustrating a process executed by a control unit.

DESCRIPTION OF EMBODIMENTS

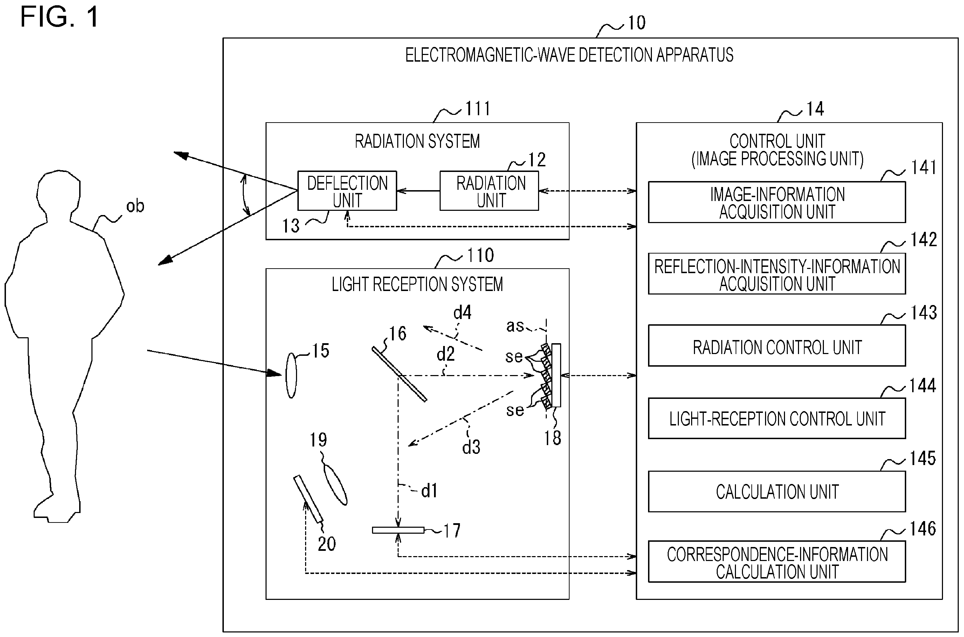

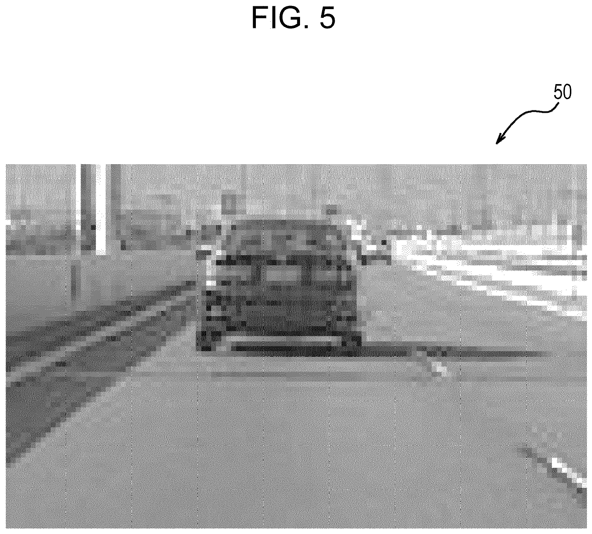

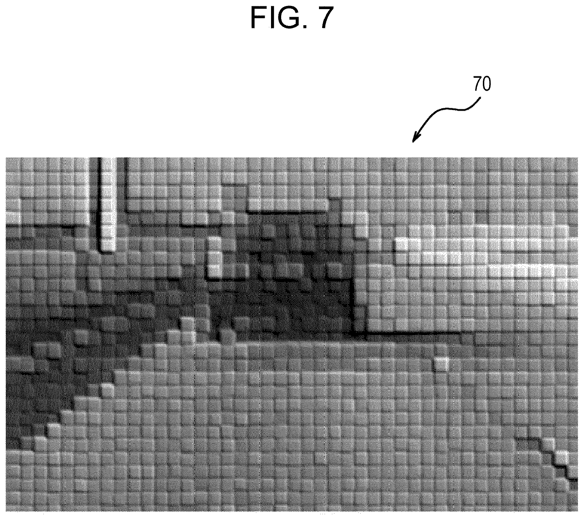

FIG. 1 is a diagram illustrating a schematic configuration of an electromagnetic-wave detection apparatus 10 according to an embodiment. The electromagnetic-wave detection apparatus 10 includes a radiation system 111, a light reception system 110, and a control unit 14. In the present embodiment, the distance-measurement apparatus 10 functions as a distance-measurement apparatus. The control unit 14 functions as an image processing apparatus that performs calibration by associating a reflection-intensity image 70 (see FIG. 7), which will be described later, with a luminance image 50 (see FIG. 5). In the present embodiment, although the electromagnetic-wave detection apparatus 10 includes the single radiation system 111 and the single light reception system 110, the electromagnetic-wave detection apparatus 10 may include multiple light reception systems 110 and multiple radiation systems 111, and the multiple light reception systems 110 may correspond to their respective radiation systems 111.

The radiation system 111 includes a radiation unit 12 and a deflection unit 13. The light reception system 110 includes an incident unit 15, a separation unit 16, a first detection unit 20, a second detection unit 17, a switching unit 18, and a first subsequent-stage optical system 19. The control unit 14 includes an image-information acquisition unit 141, a reflection-intensity-information acquisition unit 142, a radiation control unit 143, a light-reception control unit 144, a calculation unit 145, and a correspondence-information calculation unit 146. Details of each functional block of the electromagnetic-wave detection apparatus 10 will be described later.

In the drawings, dashed lines connecting the functional blocks each indicate a flow of a control signal or a flow of information that is transmitted and received. Each of the communications indicated by the dashed lines may be wired communication or may be wireless communication. In the drawings, solid arrows each indicate an electromagnetic wave in the form of a beam, and an object ob is a subject of the electromagnetic-wave detection apparatus 10. The subject may include, for example, objects such as a road, a median strip, a sidewalk, a roadside tree, and a vehicle and may include a person. There may be one or more objects ob.

The electromagnetic-wave detection apparatus 10 acquires an image including the subject and is capable of identifying the subject by detecting a reflected wave reflected by the subject. As mentioned above, the electromagnetic-wave detection apparatus 10 includes the calculation unit 145 that measures a distance to the object ob, and the electromagnetic-wave detection apparatus 10 functions as a distance-measurement apparatus.

(Radiation System)

The radiation system 111 radiates an electromagnetic wave into a space in which the object ob is present. In the present embodiment, the radiation system 111 radiates an electromagnetic wave radiated by the radiation unit 12 toward the space in which the object ob is present via the deflection unit 13. As another example, the radiation system 111 may have a configuration in which the radiation unit 12 directly radiates an electromagnetic wave toward the object ob.

The radiation unit 12 radiates at least one of an infrared ray, a visible light ray, an ultraviolet ray, and a radio wave. In the present embodiment, the radiation unit 12 radiates an infrared ray. In addition, in the present embodiment, the radiation unit 12 radiates an electromagnetic wave in the form of a narrow beam of, for example, 0.5 degrees. The radiation unit 12 radiates the electromagnetic wave in pulses. The radiation unit 12 may include, for example, a light emitting diode (LED) as an electromagnetic-wave radiation element. Alternatively, the radiation unit 12 may include, for example, a laser diode (LD) as an electromagnetic-wave radiation element. The radiation unit 12 is switched to perform radiation of an electromagnetic wave and to stop radiation of the electromagnetic wave under control of the control unit 14. Here, the radiation unit 12 may form an LED array or an LD array that includes multiple electromagnetic-wave radiation elements arranged in an array and may radiate multiple beams simultaneously.

The deflection unit 13 causes the electromagnetic wave radiated by the radiation unit 12 to be output in different directions so as to change a position to be irradiated with the electromagnetic wave, which is radiated into the space in which the object ob is present. The deflection unit 13 may cause the electromagnetic wave to be output in different directions by reflecting the electromagnetic wave from the radiation unit 12 while changing the orientation of the deflection unit 13. For example, the deflection unit 13 causes the electromagnetic wave radiated by the radiation unit 12 to scan the object ob in a one-dimensional direction or a two-dimensional direction. Here, if the radiation unit 12 is configured as, for example, an LD array, the deflection unit 13 may reflect all the multiple beams that are output by the LD array so as to cause them to be output in the same direction. In other words, the radiation system 111 may include the single deflection unit 13 for the radiation unit 12 that includes one or more electromagnetic-wave radiation elements.

The deflection unit 13 is configured such that at least a portion of an irradiation region that is a space to which an electromagnetic wave is output is included in an electromagnetic-wave detection range of the light reception system 110. Thus, at least part of an electromagnetic wave that is radiated into the space in which the object ob is present via the deflection unit 13 is reflected by at least a portion of the object ob and may be detected by the light reception system 110. Here, an electromagnetic wave that is a radiation wave reflected by at least a portion of the object ob will hereinafter be referred to as a reflected wave. The radiation wave is an electromagnetic wave that is radiated from the radiation system 111 in multiple directions in the space in which the object ob is present.

The deflection unit 13 includes, for example, a micro-electromechanical systems (MEMS) mirror, a polygon mirror, and a galvanometer mirror. In the present embodiment, the deflection unit 13 includes a MEMS mirror.

The deflection unit 13 changes a direction in which the deflection unit 13 reflects an electromagnetic wave under control of the control unit 14. The deflection unit 13 may include an angle sensor such as, for example, an encoder and may notify the control unit 14 of an angle that is detected by the angle sensor as direction information regarding a direction in which the electromagnetic wave is reflected. In such a configuration, the control unit 14 may calculate an irradiation position of an electromagnetic wave on the basis of the direction information received from the deflection unit 13. The control unit 14 may also calculate the irradiation position on the basis of a drive signal that is input in order to cause the deflection unit 13 to change the direction in which the deflection unit 13 reflects the electromagnetic wave.

(Light Reception System)

In the following description, the phrase "electromagnetic waves including a reflected wave" refers to electromagnetic waves that include a reflected wave reflected by the object ob and that are incident on the light reception system 110. In other words, electromagnetic waves that are incident on the light reception system 110 may sometimes be referred to as "electromagnetic waves including a reflected wave" in order to distinguish them from the radiation wave. The electromagnetic waves including a reflected wave include not only the reflected wave, which is the electromagnetic wave that is radiated by the radiation system 111 and reflected by the object ob, but also outside light, such as sunlight, and light that is outside light reflected by the object ob.

The incident unit 15 is an optical system including at least one optical element and forms an image of the object ob, which is the subject. The optical element includes, for example, at least one selected from the group consisting of a lens, a mirror, a diaphragm, an optical filter, and the like.

The separation unit 16 is disposed between the incident unit 15 and a first image-forming position that is a position where the incident unit 15 forms an image of the object ob spaced apart from the incident unit 15 by a predetermined distance. The separation unit 16 separates the electromagnetic waves including a reflected wave in accordance with their wavelengths in such a manner that each wave travels in a first direction d1 or a second direction d2. The separation unit 16 may separate the electromagnetic waves including a reflected wave into a reflected wave and the other electromagnetic waves. The other electromagnetic waves may include, for example, light such as visible light.

In the present embodiment, the separation unit 16 reflects part of the electromagnetic waves including a reflected wave in the first direction d1 and enables another part of them to pass therethrough in the second direction d2. In the present embodiment, the separation unit 16 reflects, in the first direction d1, visible light that is included in the electromagnetic waves incident on the separation unit 16 and that is environmental light, such as sunlight, reflected by the object ob. The separation unit 16 enables an infrared ray that is included in the electromagnetic waves incident on the separation unit 16 and that is radiated by the radiation unit 12 and reflected by the object ob to pass therethrough in the second direction d2. As another example, the separation unit 16 may enable part of the electromagnetic waves, which are incident on the separation unit 16, to pass therethrough in the first direction d1 and may reflect another part of the electromagnetic waves in the second direction d2. The separation unit 16 may refract part of the electromagnetic waves, which are incident on the separation unit 16, in the first direction d1 and may refract another part of the electromagnetic waves in the second direction d2. Examples of the separation unit 16 include a half mirror, a beam splitter, a dichroic mirror, a cold mirror, a hot mirror, a metasurface, a deflection element, and a prism.

The second detection unit 17 is disposed on a path of an electromagnetic wave that travels in the first direction d1 from the separation unit 16. The second detection unit 17 is disposed at an image-forming position in the first direction d1 where an image of the object ob is formed or is disposed in the vicinity of this image-forming position. The second detection unit 17 detects an electromagnetic wave that has travelled in the first direction d1 from the separation unit 16.

The second detection unit 17 may be disposed with respect to the separation unit 16 in such a manner that a first travelling axis of the electromagnetic wave that travels in the first direction d1 from the separation unit 16 is parallel to a first detection axis of the second detection unit 17. The first travelling axis is the central axis of an electromagnetic wave that travels in the first direction d1 from the separation unit 16 and that propagates while spreading radially. In the present embodiment, the first travelling axis is an axis that is obtained by extending an optical axis of the incident unit 15 to the separation unit 16 and bending the optical axis at the separation unit 16 to make it parallel to the first direction d1. The first detection axis is an axis that passes through the center of a detection surface of the second detection unit 17 and that is perpendicular to the detection surface.

The second detection unit 17 may be disposed in such a manner that the gap between the first travelling axis and the first detection axis is equal to or less than a first gap threshold. Alternatively, the second detection unit 17 may be disposed in such a manner that the first travelling axis and the first detection axis coincide with each other. In the present embodiment, the second detection unit 17 is disposed in such a manner that the first travelling axis and the first detection axis coincide with each other.

The second detection unit 17 may be disposed with respect to the separation unit 16 such that a first angle formed by the first travelling axis and the detection surface of the second detection unit 17 is equal to or less than a first-angle threshold or such that the first angle is the same as a predetermined angle. In the present embodiment, the second detection unit 17 is disposed in such a manner that the first angle is 90 degrees.

In the present embodiment, the second detection unit 17 is a passive sensor. Specifically, in the present embodiment, the second detection unit 17 includes an element array. For example, the second detection unit 17 includes an imaging device such as an image sensor or an imaging array and captures an image formed by an electromagnetic wave focused at the detection surface so as to generate image information of a space including the captured object ob.

More specifically, in the present embodiment, the second detection unit 17 captures a visible-light image. The second detection unit 17 transmits generated image information as a signal to the control unit 14. The second detection unit 17 may capture images, such as an infrared-ray image, an ultraviolet-ray image, and a radio-wave image, other than a visible-light image.

The switching unit 18 is disposed on a path of an electromagnetic wave that travels in the second direction d2 from the separation unit 16. The switching unit 18 is disposed at a first image-forming position in the second direction d2 where an image of the object ob is formed or is disposed in the vicinity of this first image-forming position.

In the present embodiment, the switching unit 18 is disposed at the image-forming position. The switching unit 18 has an action surface as on which an electromagnetic wave that has passed through the incident unit 15 and the separation unit 16 is incident. The action surface as is formed of multiple switching elements se arranged two-dimensionally. The action surface as is a surface that produces actions such as, for example, reflection and transmission of an electromagnetic wave, in at least one of a first state and a second state, which are described below.

The switching unit 18 can switch the state of each of the switching elements se between the first state in which the switching element se causes an electromagnetic wave that is incident on the action surface as to travel in a third direction d3 and the second state in which the switching element se causes the electromagnetic wave to travel in a fourth direction d4. In the present embodiment, the first state is a first reflective state in which an electromagnetic wave that is incident on the action surface as is reflected in the third direction d3. The second state is a second reflective state in which the electromagnetic wave, which is incident on the action surface as, is reflected in the fourth direction d4.

More specifically, in the present embodiment, each of the switching elements se of the switching unit 18 has a reflective surface at which an electromagnetic wave is reflected. The switching unit 18 switches the state of each of the switching elements se between the first reflective state and the second reflective state by arbitrarily changing the orientation of the reflective surface of the switching element se.

In the present embodiment, the switching unit 18 includes, for example, a digital micro-mirror device (DMD). The DMD can switch the state of the reflective surface of each of the switching elements se between a state in which the reflective surface is inclined at +12 degrees with respect to the action surface as and a state in which the reflective surface is inclined at -12 degrees with respect to the action surface as by driving a micro-reflective surface included in the action surface as. The action surface as is parallel to a plate surface of a substrate of the DMD on which the micro-reflective surface is placed.

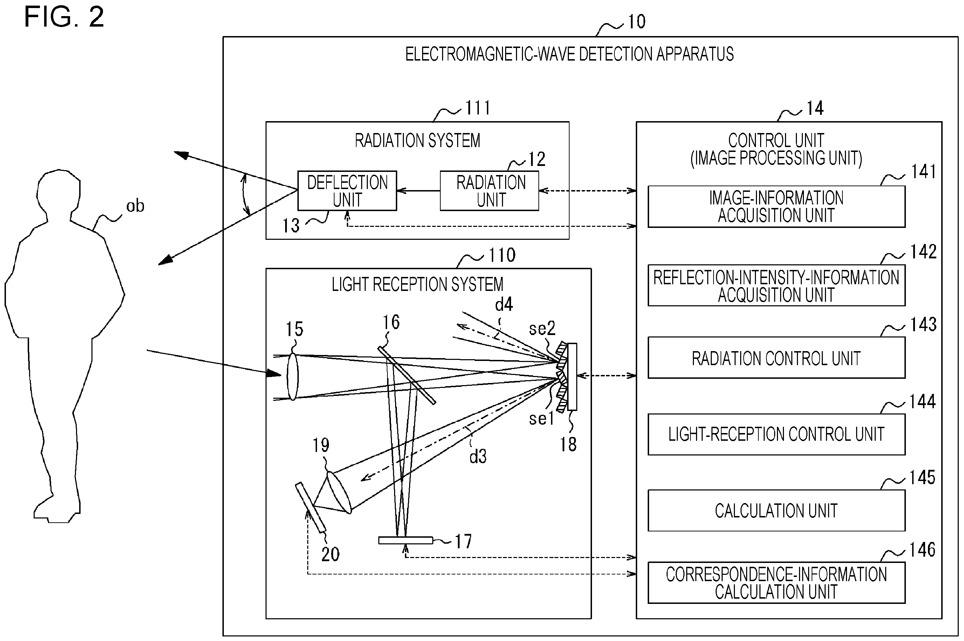

The switching unit 18 switches the state of each of the switching elements se between the first state and the second state under control of the control unit 14. As illustrated in FIG. 2, for example, the switching unit 18 simultaneously may cause an electromagnetic wave that is incident on switching elements se1, which are some of the switching elements se, to travel in the third direction d3 by switching the states of the switching elements se1 to the first state and may cause an electromagnetic wave that is incident on a switching element se2, which is one of the switching elements se and which is different from the switching elements se1, to travel in the fourth direction d4 by switching the state of the switching element se2 to the second state. More specifically, the control unit 14 detects a direction in which an electromagnetic wave is radiated or an irradiation position of the electromagnetic wave on the basis of direction information received from the deflection unit 13. Then, the control unit 14 brings one of the switching elements se1 that corresponds to the detected direction in which the electromagnetic wave is radiated or to the detected irradiation position into the first state and brings the rest of the switching elements se1 into the second state so as to selectively cause a reflected wave from the object ob to travel in the third direction d3. Among the electromagnetic waves that have passed through the separation unit 16, the electromagnetic waves excluding a reflected wave from the object ob travel in the fourth direction d4 and thus will not be incident on the first detection unit 20.

As illustrated in FIG. 1, the first subsequent-stage optical system 19 is disposed in the third direction d3 from the switching unit 18. The first subsequent-stage optical system 19 includes, for example, at least one of a lens and a mirror. The first subsequent-stage optical system 19 focuses an electromagnetic wave whose travelling direction has been switched by the switching unit 18 so as to form an image of the object ob.

The first detection unit 20 detects a reflected wave. The first detection unit 20 is disposed at a position at which the first detection unit 20 can detect an electromagnetic wave that is caused by the switching unit 18 to travel in the third direction d3 and then to further travel by passing through the first subsequent-stage optical system 19. The first detection unit 20 detects an electromagnetic wave that has passed through the first subsequent-stage optical system 19, that is, an electromagnetic wave that has travelled in the third direction d3, and outputs a detection signal.

The first detection unit 20 may be arranged together with the switching unit 18 with respect to the separation unit 16 such that a second travelling axis of an electromagnetic wave that travels in the second direction d2 from the separation unit 16 and that is caused to travel in the third direction d3 by the switching unit 18 is parallel to a second detection axis of the first detection unit 20. The second travelling axis is the central axis of an electromagnetic wave that travels in the third direction d3 from the switching unit 18 and that propagates while spreading radially. In the present embodiment, the second travelling axis is an axis that is obtained by extending the optical axis of the incident unit 15 to the switching unit 18 and bending the optical axis at the switching unit 18 to make it parallel to the third direction d3. The second detection axis is an axis that passes through the center of a detection surface of the first detection unit 20 and that is perpendicular to the detection surface.

The first detection unit 20 may be arranged together with the switching unit 18 in such a manner that the gap between the second travelling axis and the second detection axis is equal to or less than a second gap threshold. The second gap threshold may be the same as or different from the first gap threshold. Alternatively, the first detection unit 20 may be disposed in such a manner that the second travelling axis and the second detection axis coincide with each other. In the present embodiment, the first detection unit 20 is disposed in such a manner that the second travelling axis and the second detection axis coincide with each other.

The first detection unit 20 may be arranged together with the switching unit 18 with respect to the separation unit 16 such that a second angle formed by the second travelling axis and the detection surface of the first detection unit 20 is equal to or less than a second-angle threshold or such that the second angle is the same as a predetermined angle. The second-angle threshold may be the same as or different from the first-angle threshold. In the present embodiment, the first detection unit 20 is disposed in such a manner that the second angle is 90 degrees as mentioned above.

In the present embodiment, the first detection unit 20 is an active sensor that detects a reflected wave of an electromagnetic wave radiated from the radiation unit 12 toward the object ob. The first detection unit 20 includes, for example, a single element examples of which include an avalanche photodiode (APD), a photodiode (PD), and a distance-measurement image sensor. The first detection unit 20 may include an element array examples of which include an APD array, a PD array, a distance-measurement imaging array, and a distance-measurement image sensor.

In the present embodiment, the first detection unit 20 transmits, as a signal, detection information indicating that a reflected wave from the subject has been detected to the control unit 14. More specifically, the first detection unit 20 detects an electromagnetic wave in the infrared band.

In the present embodiment, the first detection unit 20 is used as a detection element for measuring a distance to the object ob. In other words, the first detection unit 20 is an element included in a distance-measurement sensor, and an image of the object ob is not necessarily formed at the detection surface of the first detection unit 20 as long as the first detection unit 20 can detect an electromagnetic wave. Thus, the first detection unit 20 does not need to be disposed at a second image-forming position that is a position at which an image is formed by the first subsequent-stage optical system 19. That is to say, in this configuration, the first detection unit 20 may be disposed at any position on a path of an electromagnetic wave that travels by passing through the first subsequent-stage optical system 19 after being caused by the switching unit 18 to travel in the third direction d3 as long as the first detection unit 20 is disposed at a position where an electromagnetic wave can be incident on the detection surface thereof from all angles of view.

With a configuration such as that described above, the electromagnetic-wave detection apparatus 10 matches a predetermined position on an image with the optical axis of a reflected wave for measuring a distance to the predetermined position.

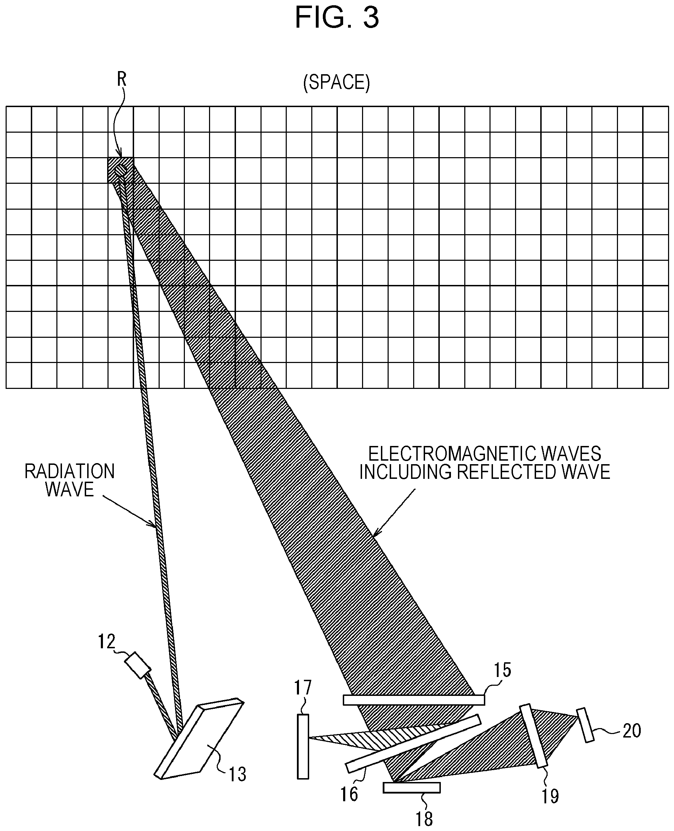

FIG. 3 is a diagram for describing detection of the electromagnetic waves including a reflected wave. In FIG. 3, the space in which the object ob is present is divided by the number of times per frame the radiation system 111 radiates an electromagnetic wave and partitioned in a grid-like pattern. In general, the time taken to detect the electromagnetic waves including a reflected wave for one frame is longer than the time taken for an imaging device or the like to acquire an image for one frame. As an example, an imaging device can acquire 30 frames of images each having $1920 \times 1080$ pixels per second. In contrast, the time taken to perform distance measurement by receiving a reflected wave of the radiated electromagnetic wave may sometimes be 20 $\mu$s for one point. Thus, the number of locations (the number of points) at which range information is acquired by receiving a reflected wave from the space is smaller than $1920 \times 1080$ per frame.

In the case illustrated in FIG. 3, a beam-shaped electromagnetic wave radiated from the radiation unit 12 is reflected by the deflection unit 13 and is incident on one region R of the space as the radiation wave. In the present embodiment, the radiation wave is an infrared ray. The electromagnetic waves including a reflected wave that is reflected by the object ob present in the region R are incident on the incident unit 15. In the present embodiment, the reflected wave is an infrared ray. In addition, the electromagnetic waves including a reflected wave include visible light that is outside light reflected by the object ob present in the region R. The separation unit 16 reflects the visible light that is part of the electromagnetic waves including a reflected wave in the first direction d1. The reflected visible light is detected by the second detection unit 17. In addition, the separation unit 16 enables an infrared ray that is part of the electromagnetic waves including a reflected wave to pass therethrough in the second direction d2. The infrared ray that has passed through the separation unit 16 is reflected by the switching unit 18, and at least a part of the infrared ray travels in the third direction d3. The infrared ray travelling in the third direction d3 passes through the first subsequent-stage optical system 19 and is detected by the first detection unit 20.

(Control Unit)

The radiation control unit 143 controls the radiation system 111. For example, the radiation control unit 143 causes the radiation unit 12 to be switched to perform radiation of an electromagnetic wave and to stop radiation of the electromagnetic wave. For example, the radiation control unit 143 causes the deflection unit 13 to change a direction in which the deflection unit 13 reflects an electromagnetic wave.

The light-reception control unit 144 controls the light reception system 110. For example, the light-reception control unit 144 causes the switching unit 18 to switch the state of each of the switching elements se between the first state and the second state.

The image-information acquisition unit 141 acquires image information of the space in which the object ob is present from the second detection unit 17, which detects an electromagnetic wave from the space. Here, the term "image information" refers to, for example, an image in which the luminance at each point of the object ob is detected, and examples of the image include a color image (an RGB image) and a monochromatic image. In the present specification, image information may sometimes be referred to as "luminance image 50" in order to distinguish it from the reflection-intensity image 70 (see FIG. 7). FIG. 5 is a diagram illustrating an example of the luminance image 50 of the space in which the object ob is present. In the example illustrated in FIG. 5, examples of the object ob include a vehicle running in front of the electromagnetic-wave detection apparatus 10, a road, a white line, and a side wall. In the example illustrated in FIG. 5, white areas have higher luminance, and black areas have lower luminance.

The calculation unit 145 calculates a distance to the object ob on the basis of detection information acquired by the first detection unit 20. The calculation unit 145 can calculate a distance by, for example, the time-of-flight (ToF) method on the basis of received detection information.

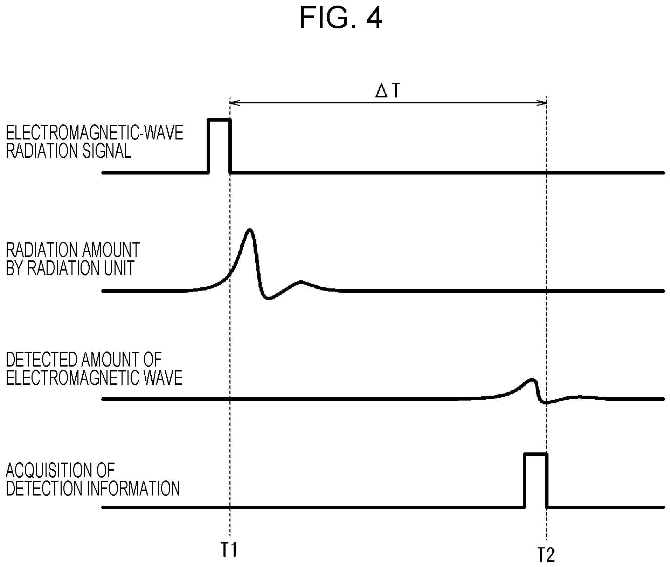

As illustrated in FIG. 4, the control unit 14 inputs an electromagnetic-wave radiation signal to the radiation unit 12 so as to cause the radiation unit 12 to radiate a pulsed electromagnetic wave (see the "electromagnetic-wave radiation signal" field). The radiation unit 12 radiates an electromagnetic wave on the basis of the electromagnetic-wave radiation signal input thereto (see the "radiation amount by radiation unit" field). The electromagnetic wave that is radiated by the radiation unit 12 and reflected by the deflection unit 13 so as to be radiated into an irradiation region that is the space in which the object ob is present is reflected in the irradiation region. In an image-forming region of the switching unit 18, a reflected wave reflected in the irradiation region is focused by the incident unit 15, and the control unit 14 switches the state of at least a subset of the switching elements se present in the image-forming region of the switching unit 18 to the first state and switches the state of at least one of the rest of the switching elements se to the second state. Then, when the first detection unit 20 detects the electromagnetic wave reflected in the irradiation region (see the "detected amount of electromagnetic wave" field), the first detection unit 20 notifies the control unit 14 of detection information.

The calculation unit 145 acquires information regarding the above-mentioned signal including detection information. The calculation unit 145 includes, for example, a time-measurement large scale integrated circuit (LSI) and measures a period of time $\Delta$T from a timing T1 at which the radiation unit 12 is caused to radiate an electromagnetic wave to a timing T2 at which detection information is acquired (see the "acquisition of detection information" field). The calculation unit 145 calculates a distance to the irradiation position by multiplying the period of time ΔT by the speed of light and dividing it by two.

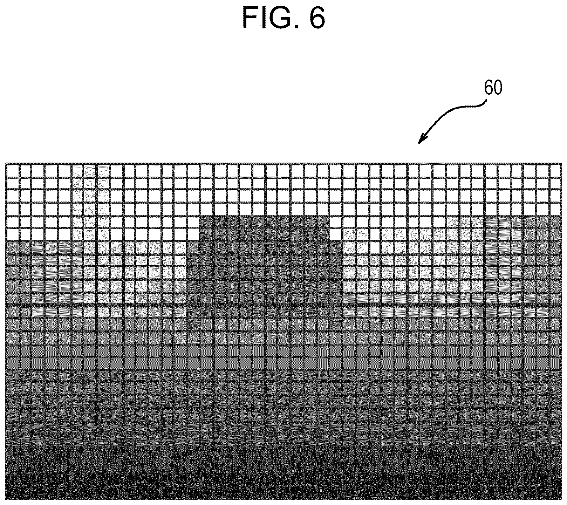

FIG. 6 is a diagram illustrating the space the same as that in the luminance image 50, which is illustrated in FIG. 5, as an image based on distance (a range image 60). The range image 60 is an image in which a distance calculated by the calculation unit 145 is visualized. In the case illustrated in FIG. 6, white areas are farther away and black areas are closer. In the range image 60, for example, all the parts of a vehicle running in front of the electromagnetic-wave detection apparatus 10 are located at approximately the same distance from the electromagnetic-wave detection apparatus 10, and thus, the entire vehicle is uniformly colored by a single color. Here, as mentioned above, the number of points at which range information is acquired by receiving a reflected wave from the space is smaller than the number of pixels in the luminance image 50 per frame (see FIG. 3). Thus, the resolution of the range image 60 is lower than the resolution of the luminance image 50. Here, the image resolution of the range image 60 corresponds to the number of points at which a distance or the like is detected by using an electromagnetic wave in a space including the subject, that is, the number of points at which range information is acquired. In the case of scanning a space by using a laser beam, the resolution of electromagnetic-wave detection refers to the number of points irradiated with the laser beam in a single scan of a target space.

The reflection-intensity-information acquisition unit 142 acquires reflection-intensity information of the radiation wave at the position of the object ob. In addition, the reflection-intensity-information acquisition unit 142 generates, on the basis of the reflection-intensity information, the reflection-intensity image 70 (see FIG. 7) representing the reflection intensity of the radiation wave in the space. The reflection-intensity information is acquired on the basis of a signal acquired from the first detection unit 20. In other words, the reflection-intensity-information acquisition unit 142 can acquire the reflection-intensity information together with detection information of a reflected wave and the like from the first detection unit 20, which detects the reflected wave. As an example, the reflection-intensity information is expressed by the ratio of the amount of an electromagnetic wave radiated by the radiation unit 12 and the electromagnetic-wave detected amount of a reflected wave, which is the electromagnetic wave reflected by the object ob. The reflection intensity of the radiated wave varies depending on the characteristics of a reflective surface of the object ob. For example, even if multiple objects ob are located at the same distance from the electromagnetic-wave detection apparatus 10, the reflection intensity of the radiated wave varies depending on differences between the materials of the reflective surfaces of the objects ob, the colors of the objects ob, and so forth. Thus, the characteristics of the reflective surface of the object ob can be determined from the reflection-intensity information of the radiation wave.

FIG. 7 is a diagram illustrating the space the same as that in the luminance image 50, which is illustrated in FIG. 5, as an image based on reflection intensity (the reflection-intensity image 70). The reflection-intensity image 70 is generated by the reflection-intensity-information acquisition unit 142. In the case illustrated in FIG. 7, white areas have greater reflection intensity, and black areas have less reflection intensity. In the reflection-intensity image 70 illustrated in FIG. 7, for example, features such as tail lights and the license plate of a vehicle running in front of the electromagnetic-wave detection apparatus 10 can be visually recognized. Here, the resolution of the reflection-intensity image 70 is lower than the resolution of the luminance image 50 for the same reason as the range image 60.

The correspondence-information calculation unit 146 calculates, on the basis of the position of the object ob in the reflection-intensity image 70 and the position of the object ob in the luminance image 50, correspondence information that makes positions (pixels) in the reflection-intensity image 70 and positions (pixels) in the luminance image 50 correspond to one another. In other words, the correspondence-information calculation unit 146 can perform calibration for reducing the positional discrepancy between a space based on image information and a space visualized from a reflected wave by using the reflection-intensity image 70 and the luminance image 50. Details of the calibration and the correspondence information will be described later.

Here, the control unit 14 may include at least one processor. The processor may load a program from an accessible memory and operate as the image-information acquisition unit 141, the reflection-intensity-information acquisition unit 142, the radiation control unit 143, the light-reception control unit 144, the calculation unit 145, and the correspondence-information calculation unit 146. The processor may include at least one of a general-purpose processor that executes a specific function by loading a specific program and a dedicated processor for specific processing. The dedicated processor may include an application specific integrated circuit (ASIC). The processor may include a programmable logic device (PLD). The PLD may include a field-programmable gate array (FPGA). The control unit 14 may include at least one of a system-on-a-chip (SoC) in which one or more processors cooperate with each other and a system-in-a-package (SiP).

(Calibration)

The electromagnetic-wave detection apparatus 10 may be mounted on a vehicle or the like. The electromagnetic-wave detection apparatus 10 may be used in an environment in which it undergoes vibration and in a high-temperature environment. If the electromagnetic-wave detection apparatus 10 is used in such environments, for example, there is a possibility that displacement, deformation, and so forth of the separation unit 16, the first detection unit 20, the second detection unit 17, the switching unit 18, or the like will occur. In such a case, there is a possibility that positional discrepancy will occur between a space based on image information and a space recognized from a reflected wave, which in turn results in inaccurate detection of the position of a subject or the like. The correspondence-information calculation unit 146 functions as an image processing apparatus together with the image-information acquisition unit 141 and the reflection-intensity-information acquisition unit 142 and, as will be described below, can perform calibration for reducing influences of displacement, deformation, and so forth of components. For example, the calibration may be performed periodically or may be performed nonperiodically. In the case of nonperiodically performing the calibration, the calibration may be performed when an engine of a vehicle or the like on which the electromagnetic-wave detection apparatus 10 is mounted is started. Alternatively, the calibration may be performed when the temperature of the electromagnetic-wave detection apparatus 10 or the temperature of a component (the switching unit 18 or the like) of the electromagnetic-wave detection apparatus 10 that is detected by a temperature detection unit, which is not illustrated, reaches a predetermined temperature or higher.

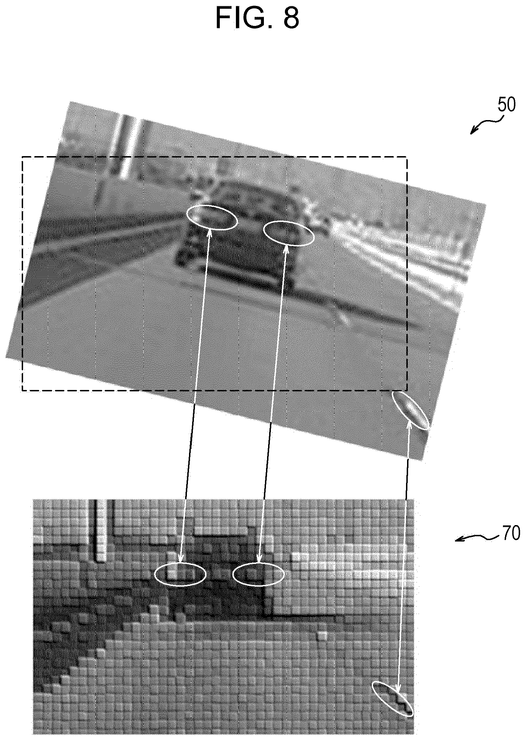

FIG. 8 is a diagram illustrating how to make the reflection-intensity image 70 and the luminance image 50 correspond to each other. In the case illustrated in FIG. 8, an optical component or the like included in the electromagnetic-wave detection apparatus 10 is affected by heat or vibration, and the luminance image 50 is enlarged, rotated, and moved in one direction, requiring calibration. For example, the luminance image 50 can be brought into the state illustrated in FIG. 8 as a result of deformation accompanied by displacement and rotation occurring in the second detection unit 17. The correspondence-information calculation unit 146 calculates correspondence information that makes the reflection-intensity image 70 and the luminance image 50 correspond to each other such that the luminance image 50 is brought into an image state (indicated by a dashed line in FIG. 8) that corresponds to the reflection-intensity image 70. The correspondence information includes at least one selected from the group consisting of rotation, scaling, and translation.

The correspondence information regarding rotation is represented by, for example, a rotation matrix R (θ) of Equation (1) given below. In Equation (1), X and Y are coordinates indicating a position in the reflection-intensity image 70, and x and y are coordinates indicating a position in the luminance image 50.
[Math. 1]

$$\begin{pmatrix} X \\ Y \end{pmatrix} = R(\theta)\begin{pmatrix} x \\ y \end{pmatrix} = \begin{pmatrix} \cos\theta & -\sin\theta \\ \sin\theta & \cos\theta \end{pmatrix}\begin{pmatrix} x \\ y \end{pmatrix} \quad \text{... Equation (1)}$$

The correspondence information regarding scaling is represented by, for example, a scaling matrix S of Equation (2) given below. In Equation (2), X, Y, x, and y are the same as those in Equation (1).
[Math. 2]

$$\begin{pmatrix} X \\ Y \end{pmatrix} = S\begin{pmatrix} x \\ y \end{pmatrix} = \begin{pmatrix} S_x & 0 \\ 0 & S_y \end{pmatrix}\begin{pmatrix} x \\ y \end{pmatrix} \quad \text{... Equation (2)}$$

The correspondence information regarding translation is represented by, for example, a translation matrix T of Equation (3) given below. In Equation (3), X, Y, x, and y are the same as those in Equation (1).
[Math. 3]

$$\begin{pmatrix} X \\ Y \end{pmatrix} = \begin{pmatrix} x \\ y \end{pmatrix} + T = \begin{pmatrix} x \\ y \end{pmatrix} + \begin{pmatrix} T_x \\ T_y \end{pmatrix} \quad \text{.. Equation (3)}$$

In the calibration, the correspondence-information calculation unit 146 extracts multiple feature points included in the reflection-intensity image 70 and multiple feature points included in the luminance image 50 in order to calculate the correspondence information. A feature point is, for example, a portion of an image that is different in shape and brightness from its surroundings. In the case where the object ob is a vehicle running in front of the electromagnetic-wave detection apparatus 10, tail lights and the license plate of the vehicle can be feature points. In the case where the object ob is a road, a white line can be a feature point. A feature point is located at the same position in the space illustrated in the reflection-intensity image 70 and the space illustrated in the luminance image 50. A feature point can be extracted by using, for example, a known image processing method such as edge detection. Here, the correspondence-information calculation unit 146 needs to select an image from which a feature point can be easily detected and to make the image correspond to the luminance image 50. For example, the range image 60 such as that illustrated in FIG. 6 is less likely to reflect the features of the surface of the object ob. In contrast, the reflection-intensity image 70 is likely to be an image reflecting the shape, the pattern, and the color of the surface of the object ob, and feature points in the image may be easily extracted. Thus, the correspondence-information calculation unit 146 preferably selects not the range image 60 but the reflection-intensity image 70.

For example, in the case illustrated in FIG. 8, the correspondence-information calculation unit 146 extracts multiple feature points including the left and right tail lights and a white line from the luminance image 50 and the reflection-intensity image 70. Then, the correspondence-information calculation unit 146 calculates correspondence information that makes the coordinates of the feature points in the luminance image 50 correspond to those in the reflection-intensity image 70. Here, as mentioned above, the resolution of the luminance image 50 is higher than the resolution of the reflection-intensity image 70. It is preferable that the image resolution of the reflection-intensity image 70 and the image resolution of the luminance image 50 match or approximate each other. Thus, the correspondence-information calculation unit 146 preferably reduces the resolution of the luminance image 50 by performing downsampling of the luminance image 50 such that the resolution of the luminance image 50 matches the resolution of the reflection-intensity image 70. In other words, the correspondence-information calculation unit 146 preferably calculates the correspondence information by using the luminance image 50 that has been downsampled and the reflection-intensity image 70. Here, although the number of feature points to be extracted is not limited, it is preferable that a large number (e.g., 10 points or more) of feature points be extracted so that the correspondence information can be calculated accurately. Here, instead of performing downsampling of the luminance image 50, the resolution of the reflection-intensity image 70 may be increased by super-resolution or the like. Both the resolution of the reflection-intensity image 70 and the resolution of the luminance image 50 may be changed.

(Image Processing Method)

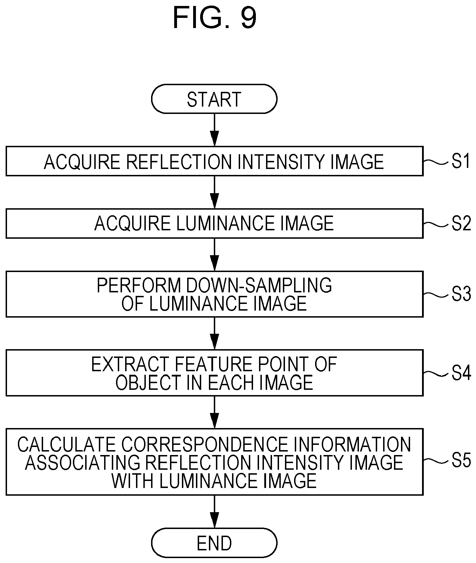

The control unit 14 of the electromagnetic-wave detection apparatus 10 performs image processing in accordance with, for example, the flowchart illustrated in FIG. 9.

The correspondence-information calculation unit 146 of the control unit 14 acquires the reflection-intensity image 70, which is generated by the reflection-intensity-information acquisition unit 142 on the basis of reflection-intensity information (step S 1).

The correspondence-information calculation unit 146 of the control unit 14 acquires the luminance image 50 generated by the image-information acquisition unit 141 (step S2). Here, the correspondence-information calculation unit 146 may acquire the luminance image 50 first and then may acquire the reflection-intensity image 70. In other words, the operation of step S 1 may be performed before the operation of step S2.

The correspondence-information calculation unit 146 of the control unit 14 performs downsampling of the luminance image 50 (step S3). Downsampling can match the resolution of the luminance image 50 with the resolution of the reflection-intensity image 70, and thus, the positional relationship between feature points of two images can be easily determined by using their coordinates.

The correspondence-information calculation unit 146 of the control unit 14 extracts feature points of the object ob from the reflection-intensity image 70 and the luminance image 50 (step S4). The extraction of feature points is, for example, determination of the xy coordinates (pixel positions) of feature points in the images. In the case illustrated in FIG. 8, the correspondence-information calculation unit 146 determines the coordinates $(X_1, Y_1)$ of the left tail light, the coordinates $(X_2, Y_2)$ of the right tail light, and the coordinates $(X_3, Y_3)$ of the white line in the reflection-intensity image 70. In addition, the correspondence-information calculation unit 146 determines the coordinates $(x_1, y_1)$ of the left tail light, the coordinates $(x_2, y_2)$ of the right tail light, and the coordinates $(x_3, y_3)$ of the white line in the luminance image 50.

The correspondence-information calculation unit 146 of the control unit 14 calculates the correspondence information that makes the reflection-intensity image 70 and the luminance image 50 correspond to each other (step S5). In the case illustrated in FIG. 8, the correspondence-information calculation unit 146 calculates the rotation matrix R (θ) of Equation (1), the scaling matrix S of Equation (2), and the translation matrix T of Equation (3) such that the coordinates $(x_1, y_1)$, $(x_2, y_2)$, and $(x_3, y_3)$ correspond to the coordinates $(X_1, Y_1)$, $(X_2, Y_2)$, and $(X_3, Y_3)$, respectively. Here, the correspondence-information calculation unit 146 may calculate at least one of the rotation matrix R (θ), the scaling matrix S, and the translation matrix T that is required for making the coordinates correspond to their respective coordinates. The rotation matrix R (θ), the scaling matrix S, and the translation matrix T are transformation formulas that are applied to the luminance image 50 in order to make the coordinates $(x_1, y_1)$, $(x_2, y_2)$, and $(x_3, y_3)$ match or approximate the coordinates $(X_1, Y_1)$, $(X_2, Y_2)$, and $(X_3, Y_3)$, respectively.

The correspondence information calculated by the correspondence-information calculation unit 146 of the control unit 14 is stored in, for example, a storage unit accessible by the control unit 14. For example, the control unit 14 calculates the three-dimensional position of the subject, and in the case of outputting an image as driver-assistance information, the control unit 14 performs correction of the image on the basis of the correspondence information stored in the storage unit.

As described above, the image processing apparatus is included in, for example, the electromagnetic-wave detection apparatus 10, which is a distance-measurement apparatus, and performs, with the above-described configuration, calibration using the reflection-intensity image 70 and the luminance image 50. The electromagnetic-wave detection apparatus 10 can perform correction of the image by using the correspondence information obtained through the calibration. In other words, according to the present embodiment, the image processing apparatus and the distance-measurement apparatus can reduce the influence of environmental changes in electromagnetic wave detection. That is to say, positional discrepancy between positions in a space recognized from image information and positions in a space recognized from a reflected wave can be eliminated or reduced.

(Variations)

Although the present disclosure has been described with reference to the drawings and on the basis of the embodiment, it is to be noted that variations and various corrections can be easily made by those skilled in the art on the basis of the present disclosure. Therefore, it is to be noted that such variations and corrections are included in the scope of the present disclosure.

In the above-described embodiment, although the correspondence-information calculation unit 146 performs downsampling of the luminance image 50, this processing may be omitted. In addition, feature points are not limited to those mentioned above as examples. For example, the object ob may be a pedestrian, and their clothing and their head may be used as feature points. Alternatively, the object ob may be a road, and road markings other than white lines may be used as feature points.

In the above-described embodiment, the electromagnetic-wave detection apparatus 10 is configured to generate range information by the Direct ToF method for directly measuring the period of time from when a laser beam is radiated until the laser beam returns. However, the electromagnetic-wave detection apparatus 10 is not limited to having such a configuration. For example, the electromagnetic-wave detection apparatus 10 may generate range information by the Flash ToF method, in which an electromagnetic wave is radiated radially (i.e., radiated in multiple directions simultaneously) at regular intervals and in which the period of time from when the electromagnetic wave is radiated until the electromagnetic wave returns is indirectly measured by using the phase difference between the radiated electromagnetic wave and the returned electromagnetic wave. Alternatively, the electromagnetic-wave detection apparatus 10 may employ another ToF method such as, for example, the phased ToF method and generate range information.

In the above-described embodiments, although the switching unit 18 can switch the travelling direction of an electromagnetic wave that is incident on the action surface as between two directions, the switching unit 18 may switch the travelling direction of the electromagnetic wave between three or more directions instead of two directions.

In the above-described embodiment, in the switching unit 18, the first state is the first reflection state in which an electromagnetic wave that is incident on the action surface as is reflected in the third direction d3, and the second state is the second reflection state in which an electromagnetic wave that is incident on the action surface as is reflected in the fourth direction d4. However, each of these states may be another state.

For example, the first state may be a transmission state in which an electromagnetic wave that is incident on the action surface as is allowed to pass through the action surface as and travel in the third direction d3. More specifically, switching elements included in a switching unit 181 that is an alternative to the above-described switching unit 18 and that has a configuration different from that of the switching unit 18 may each include a shutter having a reflective surface at which an electromagnetic wave is reflected in the fourth direction d4. In the switching unit 181 having such a configuration, the state of each of the switching elements may be switched between the transmission state, which is the first state, and the reflection state, which is the second state, by opening and closing the shutter of the switching element.

An example of the switching unit 181 having such a configuration may be a switching unit that includes a MEMS shutter in which multiple shutters that are openable and closable are arranged in an array. Another example of the switching unit 181 may be a switching unit that includes a liquid crystal shutter whose state can be switched, in accordance with a liquid-crystal molecular orientation, between a reflection state in which an electromagnetic wave is reflected and a transmission state in which an electromagnetic wave is allowed to pass therethrough. In the switching unit 181 having such a configuration, the state of each of the switching elements may be switched between the transmission state, which is the first state, and the reflection state, which is the second state, by switching the liquid-crystal molecular orientation of the switching element.

In the electromagnetic-wave detection apparatus 10, the light reception system 110 may further include a second subsequent-stage optical system and a third detection unit. The second subsequent-stage optical system is disposed in the fourth direction d4 from the switching unit 18 and forms an image of the object ob. The third detection unit is disposed on a path of an electromagnetic wave that is caused to travel in the fourth direction d4 by the switching unit 18 and that further travels by passing through the second subsequent-stage optical system, and the third detection unit detects an electromagnetic wave that has travelled in the fourth direction d4.

In the above-described embodiments, the electromagnetic-wave detection apparatus 10 has a configuration in which the second detection unit 17 is a passive sensor and in which the first detection unit 20 is an active sensor. However, the electromagnetic-wave detection apparatus 10 is not limited to having such a configuration. For example, in the electromagnetic-wave detection apparatus 10, advantageous effects the same as, and/or similar to, those of the above-described embodiment can be obtained both in the case where the second detection unit 17 and the first detection unit 20 are active sensors and in the case where the second detection unit 17 and the first detection unit 20 are passive sensors.

In the present embodiment, the calculation unit 145 measures a distance to the object ob, and the electromagnetic-wave detection apparatus 10 has a function of serving as a distance-measurement apparatus. Here, the electromagnetic-wave detection apparatus 10 is not limited to being configured to measure a distance. For example, the electromagnetic-wave detection apparatus 10 may be a driver-assistance apparatus that detects the presence of the object ob, which is an obstacle on a road, and gives a warning. In this case, the control unit 14 does not need to include the calculation unit 145. As another example, the electromagnetic-wave detection apparatus 10 may be a surveillance apparatus that detects the presence of the object ob, which is a suspicious object in the surroundings.

Some of the image-information acquisition unit 141, the reflection-intensity-information acquisition unit 142, the radiation control unit 143, the light-reception control unit 144, the calculation unit 145, and the correspondence-information calculation unit 146 are not necessarily included in the control unit 14 and may be provided separately from the control unit 14. For example, the calculation unit 145 may be provided as a control device that is independent of the control unit 14.

The functions of the image-information acquisition unit 141, the reflection-intensity-information acquisition unit 142, the correspondence-information calculation unit 146, and the like, which are included in the control unit 14, are not necessarily included in the electromagnetic-wave detection apparatus 10 and may be provided as a different device.

Although a representative example has been described in the above embodiments, it is obvious to those skilled in the art that many changes and substitutions can be made within the gist and the scope of the present disclosure. Thus, the present disclosure shall not be considered to be limited to the above-described embodiment, and variations and various changes can be made without departing from the scope of the claims. For example, some of the configuration blocks illustrated in the configuration diagrams of the embodiment can be combined into a single configuration block, or one of the configuration blocks may be divided into multiple configuration blocks.

Although the solutions of the present disclosure have been described above as apparatuses, the present disclosure may also be implemented as an aspect including these and may also be implemented as a method, a program, and a storage medium recording a program, which substantially correspond to these, and it shall be understood that these are also included within the scope of the present disclosure.

REFERENCE SIGNS

| | |
|---|---|
| 10 | electromagnetic-wave detection apparatus |
| 12 | radiation unit |
| 13 | deflection unit |
| 14 | control unit |
| 15 | incident unit |
| 16 | separation unit |
| 17 | second detection unit |
| 18, 181 | switching unit |
| 19 | first subsequent-stage optical system |
| 20 | first detection unit |
| 50 | luminance image |
| 60 | range image |
| 70 | reflection-intensity image |
| 110 | light reception system |
| 111 | radiation system |
| 141 | image-information acquisition unit |
| 142 | reflection-intensity-information acquisition unit |
| 143 | radiation control unit |
| 144 | light-reception control unit |
| 145 | calculation unit |
| 146 | correspondence-information calculation unit |
| as | action surface |

d1, d2, d3, d4     first direction, second direction, third direction, fourth direction
ob              object

**Claims**

1. An image processing apparatus comprising:

   a reflection-intensity-information acquisition unit configured to acquire reflection-intensity information of a radiation wave at a position of an object, the radiation wave being an electromagnetic wave radiated in multiple directions in a space in which the object is present, based on a reflected wave that is the radiation wave reflected by the object and generate a reflection-intensity image representing a reflection intensity of the radiation wave in the space based on the reflection-intensity information;
   an image-information acquisition unit configured to acquire a luminance image of the space; and
   a correspondence-information calculation unit configured to calculate, based on a position of the object in the reflection-intensity image and a position of the object in the luminance image, correspondence information that makes the reflection-intensity image and the luminance image correspond to each other.

2. The image processing apparatus according to claim 1,
   wherein the correspondence information includes at least one selected from the group consisting of rotation, scaling, and translation for making the reflection-intensity image and the luminance image correspond to each other.

3. The image processing apparatus according to claim 1 or 2,
   wherein a predetermined position in the luminance image and an optical axis of the reflected wave from the predetermined position match each other.

4. The image processing apparatus according to claim 3,

   wherein the reflection-intensity-information acquisition unit acquires the reflection-intensity information from a first detection unit configured to detect the reflected wave,
   wherein the image-information acquisition unit acquires the image information from a second detection unit configured to detect the light,
   wherein the first detection unit detects the reflected wave separated from electromagnetic waves including the reflected wave in accordance with a wavelength, and
   wherein the second detection unit detects the light separated from the electromagnetic waves including the reflected wave in accordance with a wavelength.

5. The image processing apparatus according to any one of claims 1 to 4,

   wherein the luminance image has a resolution higher than a resolution of the reflection-intensity image, and
   wherein the correspondence-information calculation unit calculates the correspondence information by using the luminance image whose resolution has been reduced and the reflection-intensity image or calculates the correspondence information by using the luminance image and the reflection-intensity image whose resolution has been increased.

6. The image processing apparatus according to any one of claims 1 to 5, further comprising:
   a control unit configured to correct the luminance image based on the correspondence information.

7. An image processing apparatus comprising:

   an image-information acquisition unit configured to acquire a luminance image of a space in which an object is present;
   a reflection-intensity-information acquisition unit configured to acquire a reflection-intensity image representing a reflection intensity of a radiation wave at a position in the space, the radiation wave being an electromagnetic wave radiated into the space, and the reflection-intensity image being generated based on a reflected wave that is the radiation wave reflected by the object; and
   a correspondence-information calculation unit configured to calculate correspondence information that makes a position included in the reflection-intensity image and a position included in the luminance image correspond to each other, each of the positions corresponding to a predetermined position in the space.

8. The image processing apparatus according to claim 7,
   wherein the correspondence information is a transformation formula applied to the reflection-intensity image or the luminance image for making the position included in the reflection-intensity image match or approximate the position included in the luminance image.

9. A distance-measurement apparatus comprising:

   a reflection-intensity-information acquisition unit configured to acquire reflection-intensity information of a radiation wave at a position of an object, the radiation wave being an electromagnetic wave radiated in multiple directions in a space in which the object is present, based on a reflected wave that is the radiation wave reflected by the object and generate a reflection-intensity image representing a reflection intensity of the radiation wave in the space based on the reflection-intensity information;
   an image-information acquisition unit configured to acquire a luminance image of the space;
   a correspondence-information calculation unit configured to calculate, based on a position of the object in the reflection-intensity image and a position of the object in the luminance image, correspondence information that makes the reflection-intensity image and the luminance image correspond to each other; and
   a calculation unit configured to calculate a distance to the object based on detection information of the reflected wave acquired with the reflection-intensity information.

FIG. 1

ELECTROMAGNETIC-WAVE DETECTION APPARATUS ~10

ob

RADIATION SYSTEM ~111

RADIATION UNIT ~12

DEFLECTION UNIT

13

LIGHT RECEPTION SYSTEM ~110

d4
d2
as
se
16
se
15
18
d3
19
d1
20
17

CONTROL UNIT (IMAGE PROCESSING UNIT) ~14

IMAGE-INFORMATION ACQUISITION UNIT ~141

REFLECTION-INTENSITY-INFORMATION ACQUISITION UNIT ~142

RADIATION CONTROL UNIT ~143

LIGHT-RECEPTION CONTROL UNIT ~144

CALCULATION UNIT ~145

CORRESPONDENCE-INFORMATION CALCULATION UNIT ~146

EP 4 177 632 A1

15

# FIG. 2

ELECTROMAGNETIC-WAVE DETECTION APPARATUS ~10

**RADIATION SYSTEM ~111**

DEFLECTION UNIT ~13

RADIATION UNIT ~12

ob

**LIGHT RECEPTION SYSTEM ~110**

15  16  d4  se2
19  d3  se1  18
20  17

**CONTROL UNIT (IMAGE PROCESSING UNIT) ~14**

IMAGE-INFORMATION ACQUISITION UNIT ~141

REFLECTION-INTENSITY-INFORMATION ACQUISITION UNIT ~142

RADIATION CONTROL UNIT ~143

LIGHT-RECEPTION CONTROL UNIT ~144

CALCULATION UNIT ~145

CORRESPONDENCE-INFORMATION CALCULATION UNIT ~146

EP 4 177 632 A1

# FIG. 3

(SPACE)

R

RADIATION
WAVE

ELECTROMAGNETIC WAVES
INCLUDING REFLECTED WAVE

12

13

17

15

16

18

19

20

# FIG. 4

ELECTROMAGNETIC-WAVE
RADIATION SIGNAL

RADIATION AMOUNT
BY RADIATION UNIT

DETECTED AMOUNT OF
ELECTROMAGNETIC WAVE

ACQUISITION OF
DETECTION INFORMATION

$\Delta T$

T1

T2

# FIG. 5

50

FIG. 6

60

FIG. 7

70

FIG. 8

# FIG. 9

```
          ┌──────────────┐
          │    START     │
          └──────┬───────┘
                 │
                 ▼
┌─────────────────────────────────────────┐
│    ACQUIRE REFLECTION INTENSITY IMAGE     │──S1
└───────────────────┬───────────────────────┘
                    │
                    ▼
┌─────────────────────────────────────────┐
│          ACQUIRE LUMINANCE IMAGE          │──S2
└───────────────────┬───────────────────────┘
                    │
                    ▼
┌─────────────────────────────────────────┐
│         PERFORM DOWN-SAMPLING             │──S3
│           OF LUMINANCE IMAGE              │
└───────────────────┬───────────────────────┘
                    │
                    ▼
┌─────────────────────────────────────────┐
│         EXTRACT FEATURE POINT OF          │──S4
│          OBJECT IN EACH IMAGE             │
└───────────────────┬───────────────────────┘
                    │
                    ▼
┌─────────────────────────────────────────┐
│  CALCULATE CORRESPONDENCE INFORMATION     │──S5
│  ASSOCIATING REFLECTION INTENSITY IMAGE   │
│         WITH LUMINANCE IMAGE              │
└───────────────────┬───────────────────────┘
                    │
                    ▼
          ┌──────────────┐
          │     END      │
          └──────────────┘
```

# INTERNATIONAL SEARCH REPORT

| International application No. |
|---|
| PCT/JP2021/021096 |

**A. CLASSIFICATION OF SUBJECT MATTER**
Int. Cl. G01S7/497(2006.01)i, G01S17/894(2020.01)i
FI: G01S7/497, G01S17/894

According to International Patent Classification (IPC) or to both national classification and IPC

**B. FIELDS SEARCHED**

Minimum documentation searched (classification system followed by classification symbols)
Int. Cl. G01S7/48-7/51, G01S17/00-17/95, G01G3/00-3/32, G01B11/00-11/30

Documentation searched other than minimum documentation to the extent that such documents are included in the fields searched
Published examined utility model applications of Japan    1922-1996
Published unexamined utility model applications of Japan  1971-2021
Registered utility model specifications of Japan          1996-2021
Published registered utility model applications of Japan  1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2016-11935 A (TOPCON CORP.) 21 January 2016 | 7-8 |
| A | (2016-01-21), paragraphs [0076]-[0081] | 1-6, 9 |
| A | JP 2018-200927 A (KYOCERA CORP.) 20 December 2018 (2018-12-20), entire text | 1-9 |
| A | JP 2007-171092 A (ISHIKAWAJIMA-HARIMA HEAVY INDUSTRIES CO., LTD.) 05 July 2007 (2007-07-05), paragraphs [0021], [0022], fig. 3 | 1-9 |
| P, A | WO 2020/175085 A1 (KONICA MINOLTA, INC.) 03 September 2020 (2020-09-03), paragraphs [0020], [0021], [0050] | 1-9 |

☐ Further documents are listed in the continuation of Box C.   ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 15.07.2021 | 10.08.2021 |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

INTERNATIONAL SEARCH REPORT

Information on patent family members

International application No.

PCT/JP2021/021096

| Patent Documents referred to in the Report | Publication Date | Patent Family | Publication Date |
|---|---|---|---|
| JP 2016-11935 A | 21.01.2016 | (Family: none) | |
| JP 2018-200927 A | 20.12.2018 | US 2020/0174101 A1 entire text EP 3633735 A1 CN 110678773 A KR 10-2020-0003840 A | |
| JP 2007-171092 A | 05.07.2007 | (Family: none) | |
| WO 2020/175085 A1 | 03.09.2020 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020114483 A

- JP 2018200927 A